# EUROPÄISCHE PATENTSCHRIFT

(11) **EP 1 325 941 B1**
(45) Veröffentlichungstag und Bekanntmachung des Hinweises auf die Patenterteilung: **01.06.2005**
(21) Anmeldenummer: 03003584.4
(22) Anmeldetag: 04.10.1996
(51) Int. Cl.: C08K 5/3462, C08L 57/08, C08L 27/06

(54) **Stabilisatorkombinationen für chlorhaltige Polymere**
Stabiliser combinations for chlorinated polymers
Combinaisons de stabilisateurs pour les polymères chlorés

(30) Priorität: 13.10.1995 CH 291295; 07.11.1995 CH 315195
(43) Veröffentlichungstag der Anmeldung: 09.07.2003
(62) Teilanmeldung aus: 00117205.5
(73) Patentinhaber: Crompton Vinyl Additives GmbH, 68623 Lampertheim (DE)
(72) Erfinder: Wehner, Wolfgang, 64673 Zwingenberg (DE); Friedrich, Hans-Helmut, 64686 Lautertal (DE); Malzacher,Kornelia, 64678 Lindenfels (DE); Mehner, Hans-Ludwig, 68623 Lampertheim (DE); Drewes, Rolf, 67551 Worms (DE)
(74) Vertreter: Wibbelmann, Jobst, Dr., Dipl.-Chem.

(56) Entgegenhaltungen:
- EP-A- 0 354 179
- US-A- 4 656 209

## Beschreibung

Diese Anmeldung ist eine Teilanmeldung zu der am 25. Oktober 2000 veröffentlichten EP 1 046 668 A2 (Anmelde-Nr.: 00117205.5), deren Offenbarung hier durch Bezugnahme vollständig aufgenommen wird.

Die Erfindung betrifft Stabilisatorkombinationen aus einer Verbindung der unten dargestellten Formel I und mindestens einem weiteren Stoff aus den Gruppen der Perchlorat-Verbindungen, Glycidylverbindungen, beta-Diketone, beta-Ketoester, Dihydropyridine, Polydihydropyridine, Polyole, Disaccharidalkohole, sterisch gehinderten Amine (Tetraalkylpiperidinverbindungen), Alkalialumosilikate, Hydrotalcite, Alkalialumocarbonate (Dawsonite), Alkali (Erdalkali) carboxylate,-(hydrogen) carbonate oder -hydroxide, Antioxidantien, Gleitmittel sowie der Organozinnstabilisatoren, die sich zum Stabilisieren von chlorhaltigen Polymeren, besonders PVC, eignen.

PVC kann durch eine Reihe von Zusatzstoffen stabilisiert werden. Verbindungen des Bleis, Bariums und Cadmiums sind dafür besonders gut geeignet, sind jedoch heute aus ökologischen Gründen oder wegen ihres Schwermetallgehalts umstritten. (vgl."Kunstoffadditive", R. Gächter/ H. Müller, Carl Hanser Verlag, 3.Aufl., 1989, Seiten 303-311, und "Kunststoff Handbuch PVC", Band 2/1, W.Becker/D.Braun, Carl Hanser Verlag, 2.Aufl., 1985, Seiten 531-538; sowie Kirk-Othmer: "Encyclopedia of Chemical Technology", 4^{th} Ed., 1994, Vol 12, Heat Stabilizers S. 1071-1091. Man sucht daher weiter nach wirksamen Stabilisatoren und Stabilisatorkombinationen, welche frei von Blei, Barium und Cadmium sind.

Verbindungen der Formel I sind bereits in DE-PS-1.694,873, EP 65 934 und EP 41 479 beschrieben worden, und können nach bekannten Methoden in einem oder mehreren Verfahrensschritt(en) hergestellt werden.

Es wurde nun gefunden, daß man A) Verbindungen der Formel I 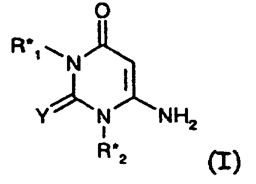 worin R*₁ und R*₂ unabhängig voneinander für C₁-C₁₂-Alkyl, C₃-C₆-Alkenyl, unsubstituiertes oder mit 1 bis 3 C₁-C₄-Alkyl-, C₁-C₄-Alkoxy-, C₅-C₈-Cycloalkyl- oder Hydroxygruppen oder Cl-Atomen substituiertes C₅-C₈-Cycloalkyl, unsubstituiertes oder am Phenylring mit 1 bis 3 C₁-C₄-Alkyl-, C₁-C₄-Alkoxy-C₅-C₈-Cycloalkyl- oder Hydroxygruppen oder Cl-Atomen substituiertes C₇-C₉-Phenylalkyl darstellen,
und R*₁ und R*₂ zusätzlich für Wasserstoff und C₁-C₁₂-Alkyl- stehen können, sowie
Y S oder O ist,
mit B) mindestens einer Verbindung aus der Gruppe der Alkalialumosilikate (Zeolithe)
kombiniert, um damit chlorhaltige Polymere, besonders PVC, zu stabilisieren.

Wobei für Verbindungen der Formel I gilt:
C₁-C₄-Alkyl bedeutet z.B.: Methyl, Ethyl, n-Propyl, iso-Propyl, n-, i-, sec- oder t-Butyl.
C₁-C₁₂-Alkyl bedeutet z.B außer den soeben genannten Resten Pentyl, Hexyl, Heptyl, Octyl, 2-Ethylhexyl, i-Octyl, Decyl, Nonyl, Undecyl oder Dodecyl.
C₁-C₄-Alkoxy bedeutet z.B. Methoxy, Ethoxy, Propoxy, Isopropoxy, Butoxy oder Isobutoxy.
C₅-C₈-Cycloalkyl bedeutet z.B. Cyclopentyl, Cyclohexyl, Cycloheptyl oder Cyclooctyl.

Bei C₇-C₉-Phenylalkyl handelt es sich beispielsweise um Benzyl, 1- oder 2-Phenylethyl, 3-Phenylpropyl, a,a-Dimethylbenzyl oder 2-Phenylisopropyl, vorzugsweise um Benzyl.

Wenn die Cycloalkylgruppen oder die Phenylgruppe der Phenylalkylreste substituiert sind, dann bevorzugt mit 2 oder einem Substituenten, und von den Substituenten vor allem mit Cl, Hydroxy, Methyl oder Methoxy.

C₃-C₆-Alkenyl bedeutet z.B. Vinyl, Allyl, Methallyl, 1-Butenyl oder 1-Hexenyl, vorzugsweise Allyl.

Bevorzugt sind dabei Verbindungen der Formel I, worin
R*₁ und R*₂ unabhängig voneinander für C₁-C₄-Alkyl und Wasserstoff stehen. Besonders bevorzugt sind entweder R*₁ und R*₂ gleich und bedeuten Methyl, Ethyl, Propyl, Butyl, oder Allyl, oder sie sind verschieden und bedeuten Ethyl und Allyl.

Die Verbindungen der Komponente A) sind zur Erzielung der Stabilisierung im chlorhaltigen Polymer zweckmäßig zu 0,01 bis 10, vorzugsweise zu 0,05 bis 5, insbesondere zu 0,1 bis 3 Gew.% zu verwenden.

Die Verbindungen der unter B) genannten Gruppe werden wie folgt erläutert:

### Zeolithe (Alkali bzw. Erdalkalialumosilikate)

Sie können durch die allgemeine Formel (VIII)

M_{x/n}[(AlO₂)ₓ(SiO₂)_{y}].wH₂O (VIII)

beschrieben werden,
worin n die Ladung des Kations M;
M ein Element der ersten oder zweiten Hauptgruppe, wie Li, Na, K, Mg, Ca, Sr oder Ba;
y:x eine Zahl von 0,8 bis 15, bevorzugt von 0,8 bis 1,2; und
w eine Zahl von 0 bis 300, bevorzugt von 0,5 bis 30, ist.

Beispiele für Zeolithe sind Natriumalumosilikate der Formeln
Na₁₂Al₁₂Si₁₂O₄₈ . 27 H₂O [Zeolith A], Na₆Al₆Si₆O₂₄ . 2 NaX. 7,5 H₂O, X= OH, Halogen, ClO₄ [Sodalith]; Na₆Al₆Si₃₀O₇₂ . 24 H₂O; Na₈Al₈Si₄₀O₉₆ . 24 H₂O; Na₁₆Al₁₆Si₂₄O₈₀ . 16 H₂O; Na₁₆Al₁₆Si₃₂O₉₆ . 16 H₂O; Na₅₆Al₅₆Si₁₃₆O₃₈₄ . 250 H₂O [Zeolith Y], Na₈₆Al₈₆Si₁₀₆O₃₈₄ . 264 H₂O [Zeolith X];
oder die durch teilweisen bzw. vollständigen Austausch der Na-Atome durch Li-, K-, Mg-, Ca-, Sr- oder Zn-Atome darstellbaren Zeolithe wie (Na,K)₁₀Al₁₀Si₂₂O₆₄ . 20 H₂O ; Ca_{4,5}Na₃[(AlO₂)₁₂(SiO₂)₁₂] . 30 H₂O; K₉Na₃[(AlO₂)₁₂(SiO₂)₁₂] . 27 *H*_{*2*}*O,*

Bevorzugte Zeolithe entsprechen den Formeln
Na₁₂Al₁₂Si₁₂O₄₈ . 27 H₂O [Zeolith A],
Na₆Al₆Si₆O₂₄ . 2NaX . 7,5 H₂O, X = OH, Cl, ClO₄, 1/2CO₃ [Sodalith]
Na₆Al₆Si₃₀O₇₂ . 24 H₂O,
Na₈Al₈Si₄₀O₉₆ . 24 H₂O,
Na₁₆Al₁₆Si₂₄O₈₀ . 16 H₂O,
Na₁₆Al₁₆Si₃₂O₉₆ . 16 H₂O,
Na₅₆Al₅₆Si₁₃₆O₃₈₄ . 250 H₂O, [Zeolith Y]
Na₈₆Al₈₆Si₁₀₆O₃₈₄ . 264 H₂O [Zeolith X]
und solche X- und Y-Zeolithe mit einem Al/ Si-Verhältnis von ca. 1:1.
oder die durch teilweisen bzw. vollständigen Austausch der Na-Atome durch Li-, K-, Mg-, Ca-, Sr-, Ba- oder Zn-Atome darstellbaren Zeolithe wie
(Na,K)₁₀Al₁₀Si₂₂O₆₄ . 20 H₂O .
Ca_{4,5}Na₃[(AlO₂)₁₂(SiO₂)₁₂] . 30 H₂O
K₉Na₃[(AlO₂)₁₂(SiO₂)₁₂] . 27 H₂O

Die angeführten Zeolithe können auch wasserärmer bzw. wasserfrei sein.

Weitere geeigente Zeolithe sind:
Na₂O·Al₂O₃·(2 bis 5) SiO₂·(3,5 bis 10) H₂O [Zeolith P]
Na₂O·Al₂O₃·2 SiO₂·(3.5-10)H₂O (Zeolith MAP)
oder die durch teilweisen bzw. vollständigen Austausch der Na-Atome durch Li-, K- oder H-Atome darstellbaren Zeolithe wie
(Li,Na,K,H)₁₀Al₁₀Si₂₂O₆₄ . 20 H₂O .
K₉Na₃[(AlO₂)₁₂(SiO₂)₁₂] . 27 H₂O
K₄Al₄Si₄O₁₆·6H₂O [Zeolith K-F]
Na₈Al₈Si₄₀O₉₆.24 H₂O Zeolith D, wie in Barrer et al.. J. Chem. Soc. 1952,
1561-71, und in US 2,950,952 beschrieben;
Ferner kommen folgende Zeolithe in Frage:
K-Offretit, wie in EP-A-400,961 beschrieben;
Zeolith R, wie in GB 841,812 beschrieben;
Zeolith LZ-217, wie in US 4,503,023 beschrieben;
Ca-freier Zeolith LZ-218, wie in US 4,333,859 beschrieben;
Zeolith T, Zeolith LZ-220, wie in US 4,503,023 beschrieben;
Na₃K₆Al₉Si₂₇O₇₂.21 H₂O [Zeolith L];
Zeolith LZ-211, wie in US 4,503,023 beschrieben;
Zeolith LZ-212, wie in US 4,503,023 beschrieben;
Zeolith O, Zeolith LZ-217 , wie in US 4,503,023 beschrieben:
Zeolith LZ-219, wie in US 4,503,023 beschrieben;
Zeolith Rho, Zeolith LZ-214, wie in US 4,503,023 beschrieben;
Zeolith ZK-19, wie in Am. Mineral. 54 1607 (1969) beschrieben;
Zeolith W (K-M), wie in Barrer et al. J. Chem. Soc. 1956, 2882, beschrieben;
Na₃₀Al₃₀Si₆₆O₁₉₂. 98 H₂O [Zeolith ZK-5, Zeolith Q]

Besonders bevorzugt werden Zeolith P-Typen der Formel I verwandt, worin x 2 bis 5 und y 3.5 bis 10 sind, ganz besonders bevorzugt Zeolith MAP der Formel I, worin x 2 und y 3.5 bis 10 sind. Insbesondere handelt es sich um Zeolith Na-P, d.h. M steht für Na. Dieser Zeolith tritt im allgemeinen in den Varianten Na-P-1, NaP-2 und Na-P-3 auf, die sich durch ihre kubische, tetragonale oder orthorhombische Struktur unterscheiden (R.M.Barrer, B.M.Munday, J.Chem.Soc. A 1971, 2909-14). In der ebengenannten Literatur ist auch die Herstellung von Zeolith P-1 und P-2 beschrieben. Zeolith P-3 ist danach sehr selten und daher kaum von praktischem Interesse. Die Struktur des Zeolithen P-1 entspricht der aus dem obengenannten Atlas of Zeolite Structures bekannten Gismonditstruktur. In neuerer Literatur (EP-A-384 070) wird zwischen kubischem (Zeolith oder P_{c}) und tetragonalem (Zeolith P₁) Zeolithen vom P-Typ unterschieden. Dort werden auch neuere Zeolithen des P-Typs mit Si:Al Verhältnissen unter 1,07:1 genannt. Hierbei handelt es sich um Zeolithe mit der Bezeichnung MAP oder MA-P für "Maximum Aluminium P". Je nach Herstellungsverfahren kann Zeolith P geringe Anteile anderer Zeolithe enthalten. Sehr reiner Zeolith P ist in WO 94/26662 beschrieben worden.

Im Rahmen der Erfindung lassen sich auch solche feinteiligen, wasserunlöslichen Natriumalumosilikate verwenden, die in Gegenwart von wasserlöslichen anorganischen oder organischen Dispergiermitteln gefällt und kristallisiert wurden. Diese können in beliebiger Weise vor oder während der Fällung bzw. Kristallisation in das Reaktionsgemisch eingebracht werden.

Ganz besonders bevorzugt sind Na-Zeolith A und Na-Zeolith P.

Die Zeolithe können in Mengen von beispielsweise 0,1 bis 20, zweckmäßig 0,1 bis 10 und insbesondere 0,1 bis 5 Gew.-Teilen, bezogen auf 100 Gew.-Teile halogenhaltiges Polymer angewandt werden.

### Gleitmittel

Als Gleitmittel kommen beispielsweise in Betracht:
Montanwachs, Fettsäureester, PE-Wachse, Amidwachse, Chlorparaffine, Glycerinester oder Erdalkaliseifen. Verwendbare Gleitmittel sind auch in "Kunststoffadditive", R. Gächter/ H. Müller, Carl Hanser Verlag, 3.Aufl., 1989, Seiten 478-488 beschrieben. Zu erwähnen sind ferner Fettketone (wie in DE 4204887 beschrieben) sowie Gleitmittel auf Silikonbasis (wie in EP 225261 beschrieben) oder Kombinationen davon, wie in EP 259783 aufgeführt.

### Weichmacher

Als organische Weichmacher kommen beispielsweise solche aus den folgenden Gruppen in Betracht:
A) Phthalsäureester:
   Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie C₇-C₉- und C₉-C₁₁-Alkylphthalate aus überwiegend linearen Alkoholen, C₆-C₁₀-n-Alkylphthalate und C₈-C₁₀-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt sind Di-2-ethylhexyl-, Di-iso-nonyl- und Di-iso-decylphthalat, die auch unter den gebräuchlichen Abkürzungen DOP (Dioctylphthalat, Di-2-ethylhexylphthalat), DINP (Diisononylphthalat), DIDP (Diisodecylphthalat) bekannt sind.
B) Ester aliphatischer Dicarbonsäuren, insbesondere Ester von Adipin-, Azelain- und Sebazinsäure
   Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.
C) Trimellithsäureester,
   beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-C₆-C₈-alkyl, Tri-C₆-C₁₀-alkyl-, Tri-C₇-C₉-alkyl- und Tri-C₉-C₁₁-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen. Gebräuchliche Abkürzungen sind TOTM (Trioctyltrimellitat, Tri-2-ethylhexyl-trimellitat), TIDTM (Triisodecyltrimellitat) und TITDTM (Triisotridecyltrimellitat).
D) Epoxyweichmacher
   In der Hauptsache sind das epoxidierte ungesättigte Fettsäuren wie z.B. epoxidiertes Sojabohnenöl.
E) Polymerweichmacher
   Eine Definition dieser Weichmacher und Beispiele für solche sind in "Kunststoffadditive", R. Gächter/H. Müller, Carl Hanser Verlag, 3.Aufl.,1989, Kapitel 5.9.6, Seiten 412-415, sowie in "PVC Technology", W.V. Titow, 4^{th}. Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol.
F) Phosphorsäureester
   Eine Definition dieser Ester ist im vorstehend genannten "Taschenbuch der Kunststoffadditive" Kapitel 5.9.5, S. 408-412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-diphenylphosphat, Kresyldiphenylphosphat, Triphenylphosphat, Trikresylphosphat und Trixylenylphosphat. Bevorzugt sind Tri-2-ethylhexylphosphat sowie^{/}Reofos 50 und 95 (Ciba-Geigy).
G) Chlorierte Kohlenwasserstoffe (Paraffine)
H) Kohlenwasserstoffe
I) Monoester, z.B. Butyloleat, Phenoxyethyloleat, Tetrahydrofurfuryloleat und Alkylsulfonsäureester.
J) Glykolester, z.B. Diglykolbenzoate.

Definitionen und Beispiele für Weichmacher der Gruppen G) bis J) sind den folgenden Handbüchern zu entnehmen:
"Kunststoffadditive", R. Gächter/H. Müller, Carl Hanser Verlag, 3.Aufl., 1989, Kapitel 5.9.14.2, S.422-425, (Gruppe G)), und Kapitel 5.9.14.1, S.422, (Gruppe H).
"PVC Technology", W.V. Titow, 4^{th}. Ed., Elsevier Publishers, 1984, Kapitel 6.10.2, Seiten 171-173, (Gruppe G), Kapitel 6.10.5 Seite 174, (Gruppe H), Kapitel 6.10.3, Seite 173, (Gruppe I) und Kapitel 6.10.4, Seiten 173-174 (Gruppe J).

Es können auch Mischungen unterschiedlicher Weichmacher verwandt werden.

Die Weichmacher können in einer Menge von beispielsweise 5 bis 120, zweckmäßig 10 bis 100 und insbesondere 20 bis 70 Gew.-Teilen, bezogen auf 100 Gew.-Teile PVC, angewandt werden.

### Pigmente

Geeignete Stoffe sind dem Fachmann bekannt. Beispiele für anorganische Pigmente sind TiO₂, Ruß, Fe₂O₃, Sb₂O₃, (Ti,Ba,Sb)O₂, Cr₂O₃, Spinelle wie Cobaltblau und Cobaltgrün, Cd(S,Se), Ultramarinblau. Organische Pigmente sind z.B. Azopigmente, Phthalo-cyaninpigmente, Chinacridonpigmente, Perylenpigmente, Diketo-pyrrolopyrrolpigmente und Anthrachinonpigmente. Bevorzugt ist TiO₂ auch in mikronisierter Form.

Definition und weitere Beschreibungen finden sich im "Handbook of PVC Formulating", EJ.Wickson, John Wiley & Sons, New York 1993.

### Füllstoffe

Füllstoffe (HANDBOOK OF PVC FORMULATING E.J.Wickson John Wiley & Sons, Inc., 1993 SS.393-449) und Verstärkungsmittel (TASCHENBUCH der KA'e R.Gächter & H.Müller, Carl Hanser, 1990, SS.549-615) (wie beispielsweise Calciumcarbonat, Dolomit, Wollastonit, Magnesiumoxid, Magnesiumhydroxid, Silikate, Glasfasern, Talk, Kaolin, Kreide, Glimmer, Metalloxide und -hydroxide, Ruß oder Graphit),

Bevorzugt ist Kreide.

### Phosphite

Beispiele sind Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, biiscidecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Bis-(2,4-di-tert-butyl-6-methylphenyl)-methylphosphit, Bis-(2,4-di-tert-butyl-6-methylphenyl)-ethylphosphit.

Besonders geeignete sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, (2,4-Di-tert-butylphenyl)-di-dodecylphosphit, (2,6-Di-tert- butylphenyl)-di-dodecylphosphit und die Dialkyl- und Diaryl-pentaerythrit-diphosphite, wie Distearylpentaerythrit-diphosphit, sowie nichtstöchiometrische Triarylphosphite. z.B. der Zusammensetzung (H₁₉C₉-C₆H₄)O_{1,5}P(OC_{12,13}H_{25,27})_{1,5}.

Bevorzugte organische Phosphite sind Distearyl-pentaerythrit-diphosphit, Trisnonylphenylphosphit und Phenyl-didecyl-phosphit.

Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewandt werden.

### Thiophosphite und Thiophosphate

Unter Thiophosphiten bzw.Thiophosphaten sind Verbindungen vom allgemeinen Typ:
(RS)₃P, (RS)₃P=O bzw. (RS)₃P=S zu verstehen, die in den Patentschriften DE 28 09 492,
EP 090.770 und EP 573.394 beschrieben wird.

Beispiele für diese Verbindungen sind: Trithiohexylphosphit, Trithiooctylphosphit, Trithio-laurylphosphit, Trithiobenzylphosphit, Trithiophosphorigesäure-tris-(carbo-i-octyloxy)-methyl-ester. Trithiophosphorigsäure-tris-(carbo-trimethylcyclohexyloxy)-methylester, Trithio-phosphorsäure-S,S,S-tris-(carbo-i-octyloxy)-methylester, Trithiophosphorsäure-S,S,S-tris-(carbo-2-ethylhexyloxy)-methylester, Trithiophosphorsäure-S,S,S-tris-1-(carbo-hexyloxy)-ethylester, Trithiophosphorsäure-S,S,S-tris-1-(carbo-2-ethylhexyloxy)-ethalester, Trithiophosphorsäure-S,S,S-tris-2-(carbo-2-ethylhexyloxy)-ethylester.

### Mercaptocarbonsäure-Ester

Beispiele für diese Verbindungen sind: Ester der Thioglycolsäure, Thioäpfelsäure, Mercaptopropionsäure, der Mercaptobenzoesäuren bzw. der Thiomilchsäure die in den Patenten FR 2 459 816, EP 90.748, FR 2 552 440, EP 365.483 beschrieben sind. Die gen. Mercaptocarbonsäure-Ester umfassen auch Polyolester bzw. deren Partialester.

### Epoxidierte Fettsäureester

Die erfindungsgemäße Stablisatorkombination kann zusätzlich vorzugsweise mindestens einen epoxidierten Fettsäureester enthalten. Es kommen dafür vor allem Ester von Fettsäuren aus natürlichen Quellen (Fettsäureglyceride), wie Sojaöl oder Rapsöl, in Frage. Es können aber auch synthetische Produkte zum Einsatz kommen, wie epoxidiertes Butyloleat.

### Antioxidantien

Als solche kommen beispielsweise in Betracht:
1. Alkylierte Monophenole, z.B. 2,6-Di-tert-butyl-4-methylphenol, 2-tert-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(a-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenal, Octylphenol, Nonylphenol,Dodecylphenol und Mischungen davon.
2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
3. Alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
5. Alkyliden-Bisphenole, z.B. 2,2'-Methylen-bis-(6-tert-butyl-4-methylphenol), 2,2'-Methylen-bis-(6-tert-butyl-4-ethylphenol), 2,2-Methylen-bis-[4-methyl-6-(a-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(a-methylbenzyl)-4-nonylphenol], 2,2'-Methylen-bis-[6-(a,a-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methyl-phenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
6. Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzylmercaptoacetat.
7. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)- 1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
10. Phosphonate und Phosphonite, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäuremonoethyleste rs, Tetrakis-(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl--dibenz[d,g]-1,3,2-dioxaphosphocin.
11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
12. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Dipentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, Di-trimethylolpropan, 4-Hydroxymethyl-1-phospha-2,6,7-trioxabicyclo-[2.2.2]-octan.
13. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thia-undecanol, 3-Thiapentadecanol, Trimethylhexandiol, Trimethylolpropan, 4-Hydroxymethyl-1-phospha-2,6,7-trioxabicyclo-[2.2.2]-octan.
14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thia-undecanol, 3-Thiapentadecanol, Trimethylhexandiol, Trimethylolpropan, 4-Hydroxymethyl-1-phospha-2,6,7-trioxabicyclo-[2.2.2]-octan.
15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thia-undecanol, 3-Thiapentadecanol, Trimethylhexandiol, Trimethylolpropan, 4-Hydroxymethyl-1-phospha-2,6,7-trioxabicyclo-[2.2.2]-octan.
16. Amide der b-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Bevorzugt sind Antioxidantien der Gruppen 1-5, 10 und 12 insbesondere 2,2-Bis-(4-hydroxyphenyl)-propan, Ester der 3,5-Di-tert-butyl-4-hydroxyphenylpropionsäure mit Octanol, Octadecanol oder Pentaerythrit oder Tris-(2,4-di-tert-butylphenyl)-phosphit.

Gegebenenfalls kann auch ein Gemisch von Antioxidantien unterschiedlicher Struktur eingesetzt werden.

Die Antioxidantien können in einer Menge von beispielsweise 0,01 bis 10, zweckmäßig 0,1 bis 10 und insbesondere 0,1 bis 5 Gew.-Teilen, bezogen auf 100 Gew.-Teile PVC, angewandt werden.

### UV-Absorber und Lichtschutzmittel

Beispiele dafür sind:
1. 2-(2'-Hydroxyphenyl)-benztriazole, wie z.B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5'-Di-tert-butyl-2'-hydroxyphenyl)-5-chlor-benztriazol, 2-(3'-tert-Butyl- 2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis-(a,a-dimethylbenzyl)-2'-hydroxyphenyl)-benztriazol, Mischung aus 2-(3'-tert-Butyl-2'-hydroxy-5'-(2-octyloxycarbonylethyl)phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlorbenztriazol, 2-(3'-tert-Butyl-2'-hydroxy-5'-(2-methoxycarbonylethyl)-phenyl)-benztriazol, 2-(3'-tert-Butyl-2'-hydroxy-5'-(2-octyloxycarbonylethyl)phenyl)-benztriazol, 2-(3'-tert-Butyl-5'-[2-(2-ethylhexyloxy)carbonylethyl]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonylethyl)phenyl-benztriazol, 2,2'-Methylen-bis[4-(1,1,3,3-tetramethylbutyl)-6-benztriazol-2-yl-phenol]; Umesterungsprodukt von 2-[3'-tert-Butyl-5'-(2-methoxycarbonylethyl)-2'-hydroxy-phenyl]-benztriazol mit Polyethylenglycol 300;mit R = 3'-tert-Butyl-4'-hydroxy-5'-2H-benztriazol-2-yl-phenyl.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert--Butyl-phenylsalicylat, Phenylsalicylat, Octylphenyl-salicylat, bibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
4. Acrylate, wie z.B. a-Cyan-b,b-diphenylacrylsäure-ethylester bzw. - isooctylester, a-Carbomethoxy-zimtsäuremethylester, a-Cyano-b-methyl-p-methoxy-zimtsäuremethylester bzw. -butylester, a-Carbomethoxy-p-methoxy-zimtsäure-methylester, N-(b-Carbomethoxy-b-cyanovinyl)-2-methyl-indolin.
5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, sowie Chimassorb966.
7. Oxalsäurediamide, wie z.B. 4,4'-Di-octyloxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

### Treibmittel

Treibmittel sind organische Azo- und Hydrazoverbindungen, Tetrazole, Oxazine, Isatosäureanhydrid, sowie Soda und Natriumbicarbonat. Bevorzugt sind Azodicarbonamid und Natriumbicarbonat sowie deren Mischungen.

Definitionen und Beispiel für Schlagzähmodifikatoren und Verarbeitungshilfen, Geliermittel, Antistatika, Biocide, Metalldesaktivatoren, optische Aufheller, Flammschutzmittel sowie Antifogging-agents sind beschrieben in "Kunststoffadditive", R.Gächter/H.Müller, Carl Hanser Verlag, 3.Aufl., 1989, und "Handbook of Polyvinyl Chloride Formulating" EJ.Wilson, J.Wiley & Sons, 1993. Schlagzähmodifikatoren sind ferner ausführlich beschrieben in "Impact Modifiers for PVC", J.T.Lutz/D.L.Dunkelberger, John Wiley & Sons, 1992.

Die Stabilisatorkombination kann nicht nur durch Mischen der Komponenten in dafür geeigneten Apparaturen hergestellt werden, sondern auch, indem ein Teil der zusätzlichen Komponenten vor Zugabe der Komponente A) *in situ* in einer Schmelze von Gleitmitteln und/oder Metallseifen hergestellt werden. Diese Methode eignet sich insbsondere zur *in situ*-Herstellung von Calciumacetylacetonat (vgl. EP 336 289).

Beispiele für die zu stabilisierenden chlorhaltigen Polymere oder deren Recyclate sind: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Polymere des Ethylens; Polymere und nachchlorierte Polymere von Chlorbutadiens und deren Copolymere mit Vinylchlorid; sowie Mischungen der genannten Polymere unter sich oder mit anderen polymerisierbaren Verbindungen.

Ferner sind umfaßt die Pfropfpolymerisate von PVC mit EVA, ABS und MBS. Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisat und Massepolymerisat.

Im Rahmen dieser Erfindung sind unter PVC auch Copolymerisate oder Pfropfpolymerisate von PVC mit polymerisierbaren Verbindungen wie Acrylnitril, Vinylacetat oder ABS zu verstehen, wobei es sich um Suspensions-, Masse- oder Emulsionspolymerisate handeln kann. Bevorzugt ist PVC Homopolymer auch in Kombination mit Polyacrylaten.

Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. In den Recyclaten können auch kleine Mengen an Fremdstoffen enthalten sein, wie z.B. Papier, Pigmente, Klebstoffe, die oft schwierig zu entfernen sind. Diese Fremdstoffe können auch aus dem Kontakt mit diversen Stoffen während des Gebrauchs oder der Aufarbeitung stammen, wie z.B. Treibstoffreste, Lackanteile, Metallspuren und Initiatorreste.

Die Erfindung betrifft auch ein Verfahren zur Stabilisierung chlorhaltiger Polymere, dadurch gekennzeichnet, daß man diesen eine Stabilisatorkombination gemäß Anspruch 1 zufügt und die Komponenten in dafür geeigneten Apparaturen innig vermischt.

Zweckmäßig kann die Einarbeitung der Stabilisatoren nach folgenden Methoden erfolgen:
- als Emulsion oder Dispersion (Eine Möglichkeit ist z.B. die Form einer pastösen Mischung. Ein Vorteil der erfindungsgemäßen Kombination besteht bei dieser Darreichungsform in der Stabilität der Paste.);
- Als Trockenmischung während des Vermischens von Zusatzkomponenten oder Polymer mischungen;
- durch direktes Zugeben in die Verarbeitungsapparatur (z.B. Kalander, Mischer, Kneter, Extruder und dergleichen) oder
- als Lösung oder Schmelze.

Das erfindungsgemäß stabilisierte PVC, das die Erfindung ebenfalls betrifft, kann auf an sich bekannte Weise hergestellt werden, wozu man unter Verwendung an sich bekannter Vorrichtungen wie der oben genannten Verarbeitungsapparaturen die erfindungsgemäße Stabilisatorkombination und gegebenenfalls weitere Zusätze mit dem PVC vermischt. Hierbei können die Stabilisatoren einzeln oder in Mischung zugegeben werden oder auch in Form sogenannter Masterbatches.

Die Erfindung betrifft somit auch ein Verfahren zur Herstellung von stabilisiertem PVC, dadurch gekennzeichnet, daß man unter Verwendung von Vorrichtungen, wie Kalandern, Mischern, Knetern, Extrudern und dergleichen, die vorstehend beschriebenen Komponenten (b) © und (d) und gegegbenenfalls weitere Zusätze mit dem PVC vermischt.

Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen, Sintern oder Spinnen, ferner Extrusions-Blasen oder eine Verarbeitung nach dem Plastisol-Verfahren. Das stabilisierte PVC kann auch zu Schaumstoffen verarbeitet werden. Setzt man als Treibmittel Azodicarbonamid ein, ist es vorteilhaft, wenn keine 1,3-Diketone zusätzlich verwendet werden.

Das erfindungsgemäß stabilisierte PVC eignet sich z.B. für Halbhart- und Weich-Rezepturen, insbesondere in Form von Weichrezepturen für Drahtummantelungen, Crash pad-Folien (Automobile), Kabelisolierungen, welche besonders bevorzugt ist. In Form von Halbhart-Rezepturen eignet sich das erfindungsgemäße PVC besonders für Dekorationsfolien, Schaumstoffe, Agrarfolien, Schläuche, Dichtungsprofile und Bürofolien.

In Form von Hart-Rezepturen eignet sich das erfindungsgemäß stabilisierte PVC besonders für Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Bürofolien und Apparatur-Gehäuse (Computer, Haushalteräte).

Beispiele für die Anwendung des erfindungsgemäßen PVC als Plastisol sind Kunstleder, Bodenbeläge, Textilbeschichtungen, Tapeten, Coil-Coatings und Unterbodenschutz für Kraftfahrzeuge.

Beispiele für Sinter-PVC-Anwendungen des erfindungsgemäß stabilisierten PVC sind Slush, Slush Mould und Coil-Coatings.

Bevorzugt sind PVC-Hartschaumstoff-Formkörper und PVC-Rohre wie für Trink- oder Abwasser, Druckrohre, Gasrohre, Kabelkanal- und Kabelschutzrohre, Rohre für Industrieleitungen, Sickerrohre, Abflußrohre, Dachrinnenrohre und Drainagerohre. Näheres hierzu siehe "Kunststoffhandbuch PVC", Band 2/2, W.Becker/H.Braun, 2.Aufl., 1985, Carl Hanser Verlag, Seite 1236-1277.

Die folgenden Beispiele erläutern die Erfindung weiter, ohne sie jedoch zu beschränken. Teile- und Prozentangaben beziehen sich - wie auch in der übrigen Beschreibung - sofern nicht anders angegeben, auf das Gewicht.

### Beispiel 1: Statischer Hitzetest

Die Mischungen gemäß den folgenden Tabellen werden jeweils 5 Minuten bei 190°C bzw.170°C auf einem Mischwalzwerk plastifiziert. Aus den so erhaltenen Folien (Stärke 0.3 mm) werden Prüfstreifen geschnitten und in einem Mathis-Thermo-Takter bei 190°C über den in den nachstehenden Tabellen angegebenen Zeitraum thermisch belastet. Anschließend wird der Yellowness Index (YI) nach ASTM-1925-70 bestimmt.

Je niedriger der gefundene YI-Wert ist, desto wirksamer verhindert das Stabilisatorsystem die Vergilbung und damit die Schädigung des Materials. Die Langzeitthermostabilität des stabilisierten Polymeren ist auch aus dem plötzlichen Einsetzen einer massiven Verfärbung zu erkennen.

Ein Stabilisator ist um so wirksamer, je länger diese Verfärbung unter thermischer Belastung verzögert wird, oder je niedriger die Anfangsverfärbung und je besser die Farbhaltung (geringe Mittelverfärbung) ist.

**Tabelle I**

| **Statischer Hitzetest bei 190°C ( 5 min. bei 170°C gewalzt)** | | | | | | | | | |
|---|---|---|---|---|---|---|---|---|---|
| **Mischung** | **V1** | **V2** | **V3** | **V4** | **V5** | **V6** | **V7** | **V8** | **V9** |
| Evipol SH 6030 | | | | | | | | | |
| (PVC K-Wert 60) | 100 | 100 | 100 | 100 | 100 | 100 | 100 | 100 | 100 |
| CH 300³⁾ | 0,8 | 0,8 | 0,8 | 0,8 | 0,8 | 0,8 | 0,8 | 0,8 | 0,8 |
| Wachs E⁶⁾ | 0,4 | 0,4 | 0,4 | 0,4 | 0,4 | 0,4 | 0,4 | 0,4 | 0,4 |
| epox. Soja-Öl | 2,0 | 2,0 | 2,0 | 2,0 | 2,0 | 2,0 | 2,0 | 2,0 | 2,0 |
| Rhodiastab 50¹¹⁾ | 0,2 | 0,2 | 0,2 | 0,2 | 0,2 | 0,2 | 0,2 | 0,2 | 0,2 |
| Ca-Stearat | 0,3 | 0,3 | 0,3 | 0,3 | 0,3 | 0,3 | 0,3 | 0,3 | 0,3 |
| Zn-Stearat | 0,5 | 0,5 | 0,5 | 0,5 | 0,5 | 0,5 | 0,5 | 0,5 | 0,5 |
| Wessalith P¹⁵⁾ | / | / | / | 1,0 | 1,0 | 1,0 | / | / | / |
| Zeolith P¹⁶⁾ | / | / | / | / | / | / | 1,0 | 1,0 | 1,0 |
| Stabilisator 1⁵⁾ | 1,0 | / | / | 1,0 | / | / | 1,0 | / | / |
| Stabilisator 2⁹⁾ | / | 1,0 | / | / | 1,0 | / | / | 1,0 | / |
| Stabilisator 3¹⁰⁾ | / | / | 1,0 | / | / | 1,0 | / | / | 1,0 |
| | YI | YI | YI | YI | YI | YI | YI | YI | YI |

| **Minuten** | | | | | | | | | |
|---|---|---|---|---|---|---|---|---|---|
| 20 | 10,3 | 12.3 | 15.4 | 8.8 | 10.6 | 14,2 | 9.3 | 9.4 | 15.7 |
| 25 | 19.6 | 34.7 | 28.6 | 12,4 | 16,8 | 19,5 | 13.3 | 15.3 | 22.6 |
| 30 | 41.1 | 29.5 | 58.8 | 21.0 | 32,5 | 30.5 | 25.0 | 29.2 | 34,8 |

| | | | | | | | | | |
|---|---|---|---|---|---|---|---|---|---|
| ¹⁵⁾Na-Zeolith A der Fa.DEGUSSA | | | | | | | | | |
| ¹⁶⁾Na-Zeolith P der Fa.DEGUSSA | | | | | | | | | |

Es zeigt sich, daß die Stabilisatorkombination mit Zeolithen ein besseres Ergebnis zeigt.

## Patentansprüche

1. Stabilisatorkombination für chlorhaltige Polymere enthaltend
A) mindestens eine Verbindung der Formel I 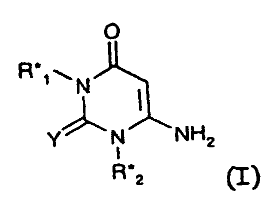 worin R*₁ und R*₂ unabhängig voneinander für C₁-C₁₂-Alkyl, C₃-C₆-Alkenyl, unsubstituiertes oder mit 1 bis 3 C₁-C₄-Alkyl-, C₁-C₄-Alkoxy-, C₅-C₈-Cycloalkyl- oder mit Hydroxygruppen oder Cl-Atomen substituiertes C₅-C₈-Cycloalkyl, unsubstituiertes oder am Phenylring mit 1 bis 3 C₁-C₄-Alkyl-, C₁-C₄-Alkoxy-, C₅-C₈-Cycloalkyl- oder mit Hydroxygruppen oder Cl-Atomen substituiertes C₇-C₉-Phenylalkyl darstellen,
und R*₁ oder R*₂ zusätzlich für Wasserstoff und C₁-C₁₂-Alkyl stehen können, sowie
Y S oder O ist, und
B) mindestens eine Verbindung aus der Gruppe der Alkalialumosilikate (Zeolithe).

2. Stabilisatorkombination gemäß Anspruch 1, worin R*₁ und R*₂ unabhängig voneinander für H und/oder C₁-C₄-Alkyl stehen.

3. Stabilisatorkombination gemäß Anspruch 1, worin die Verbindung der Komponente A) 6-Amino-1,3-dimethyl-uracil, 6-Amino-1,3-di-n-propyl-uracil, 6-Amino-1,3-di-n-butyl-uracil, 6-Amino-1,3-di-ethyl-thiouracil oder 6-Amino-1,3-di-n-butyl-thiouracil ist.

4. Stabilisatorkombination gemäß Anspruch 1 bis 3, die zusätzlich mindestens einen epoxidierten Fettsäureester enthält.

5. Stabilisatorkombination gemäß Anspruch 1 bis 4, die zusätzlich Zink-und/oder Alkali- und/oder Erdalkalicarboxylate oder Aluminiumcarboxylate enthält.

6. Stabilisatorkombination gemäß Anspruch 1 bis 5, die zusätzlich mindestens einen weiteren Stoff aus den Gruppen der Phosphite, Antioxidantien, beta-Dicarbonylverbindungen, Weichmacher, Füllstoffe, Gleitmittel oder Pigmente enthält.

7. Stabilisatorkombination gemäß Anspruch 6, worin der Füllstoff Kreide ist.

8. Stabilisatorkombination gemäß Anspruch 6, worin das Gleitmittel Calciumstearat ist.

9. Stabilisatorkombination gemäß Anspruch 6, worin als Pigment Titandioxid verwendet wird.

10. Zusammensetzung enthaltend ein chlorhaltiges Polymer und die Stabilisatorkombination gemäß Anspruch 1 bis 9.

11. Zusammensetzung gemäß Anspruch 10, **dadurch gekennzeichnet, dass** als chlorhaltiges Polymer PVC verwendet wird.

12. Verfahren zur Stabilisierung chlorhaltiger Polymere, **dadurch gekennzeichnet, dass** in die chlorhaltigen Polymere eine Stabilisatorkombination gemäß Anspruch 1 bis 9 eingearbeitet wird.

## Claims

1. A stabiliser combination comprising
A) at least one compound of formula I 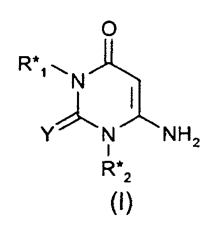 wherein R*₁ and R*₂ are each independently of the other C₁-C₁₂ alkyl, C₃-C₆ alkenyl, C₅-C₈ cycloalkyl that is unsubstituted or substituted by from 1 to 3 C₁-C₄ alkyl, C₁-C₄ alkoxy, C₅-C₈ cycloalkyl or by hydroxy groups or chlorine atoms, or C₇ -C₉ phenylalkyl that is unsubstituted or substituted at the phenyl ring by from 1 to 3 C₁-C₄ alkyl, C₁-C₄ alkoxy, C₅-C₈ cycloalkyl or by hydroxy groups or chlorine atoms,
and R*₁ and R*₂ may additionally be hydrogen and C₁-C1₂ alkyl, and Y is S or O, and
B) at least one compound selected from the group of alkali alumo silicates, zeolithes.

2. Stabiliser combination according to claim 1, wherein R*₁ and R*₂ are each independently of the other H and C₁ -C₄ alkyl or C₁ -C₄ alkyl.

3. Stabiliser combination according to claim 1, wherein the compound of component A) is 6-amino-1,3-dimethyl-uracil, 6-amino-1,3-di-n-propyl-uracil, 6-amino-1,3-di-n-butyl-uracil, 6-amino-1,3-diethyl-thiouracil or 6-amino-1,3-di-n-butyl-thiouracil.

4. Stabiliser combination according to claim 1 to 3, which additionally comprises at least one epoxidised fatty acid ester.

5. Stabiliser combination according to claim 1 to 4, which additionally comprises zinc and/or alkali metal and/or alkaline earth metal carboxylates or aluminium carboxylates.

6. Stabiliser combination according to claim 1 to 5, additionally comprising at least a compound selected from the groups of phosphites, antioxidants, beta-dicarbonyl compounds, plasticizers, fillers, lubricants or pigments.

7. Stabiliser combination according to claim 6, wherein the filler is chalk.

8. Stabiliser combination according to claim 6, wherein the lubricant is calcium stearate.

9. Stabiliser combination according to claim 6, wherein the pigment is titan dioxide.

10. Composition comprising a chlorine-containing polymer and the stabiliser combination according to claim 1 to 9.

11. Composition according to claim 10, **characterized in that** the chlorine-containing polymer is PVC.

12. Process for stabilizing chlorine-containing polymers, **characterized in that** a stabiliser combination according to claim 1 to 9 is worked into the chlorine-containing polymers.

## Revendications

1. Combinaison stabilisatrice pour un polymére contenant du chlore contenant.
A) au moins un compose de formule I 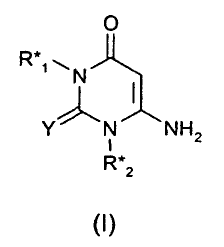 dans laquelle R*₁ et R*₂ indépendamment l'un de l'autre représentent un groupe alkyle en C₁-C₁₂, alcényle en C₃-C₆, cycloalkyle en C₅-C₈ non substitué ou substitué par 1 à 3 groupes alkyle en C₁-C₄, alcoxy en C₁-C₄ cycloalkyle en C₅-C₈ ou hydroxy ou des atomes de Cl, phénylalkyle en C₇-C₉ non substitué ou substitué sur le cycle phényle par 1 à 3 groupes alkyle en C₁-C₄ alcoxy en C₁-C₄ cycloalkyle en C₅-C₈ ou hydroxy ou des atomes de Cl,
et R*₁ ou R*₂ en outre peuvent être l'hydrogène et un groupe alkyle en C₁-C₁₂,
ainsi que Y est S ou O, et
B) au moins un composé du groupe des alumosilicates de métal, alcaline.

2. Combinaison stabilisatrice selon la revendication 1, dans laquelle R*1 et R*2 indépendamment l'un de l'autre sont H et/ou un groupe alkyle en C₁-C₄.

3. Combinaison stabilisatrice selon la revendication 1, dans laquelle le composant A) est le 6-amino-1,3-diméthyluracil, le 6-amino-1,3-di-n-propyl-uracil, le 6-amino-1,3-di-n-butyl-uracil, le 6-amino-1,3-diéthyl-thiouracil ou le 6-amino-1,3-di-n-butyl-thiouracil.

4. Combinaison stabilisatrice selon les revendications 1 à 3, qui contient en outre au moins un ester d'acide gras époxydé.

5. Combinaison stabilisatrice selon les revendications 1 à 4, qui contient en outre un hydroxyde de zinc et/ou de métal alcalin et/ou de métal alcalino-terreux ou le carboxylate d'aluminium.

6. Combinaison stabilisatrice selon les revendications 1 à 5, qui contient en outre au moins un autre compose dans le groupe des phosphites, des antioxydants, des composés bêta-dicarbonyle, des plastifiants, des charges, des agents de démoulage ou des pigments.

7. Combinaison stabilisatrice selon la revendication 6, dans laquelle la charge est de la craie.

8. Combinaison stabilisatrice selon la revendication 6, dans laquelle l'agent de démoulage est le stéarate de calcium.

9. Combinaison stabilisatrice selon la revendication 6, dans laquelle on utilise le dioxyde de titane comme pigment.

10. Composition contenant un polymère contenant du chlore et la combinaison stabilisatrice selon les revendications 1 à 9.

11. Composition selon la revendication 10, **caractérisée en ce qu'**on utilise le PVC comme polymère contenant du chlore.

12. Procédé de stabilisation d'un polymère contenant du chlore; **caractérisée en ce que** dans le polymère contenant du chlore on introduit une combinaison stabilisatrice selon les revendications 1 à 9.
